# EUROPÄISCHE PATENTSCHRIFT

(11) **EP 1 718 878 B1**
(45) Veröffentlichungstag und Bekanntmachung des Hinweises auf die Patenterteilung: **13.08.2008**
(21) Anmeldenummer: 04821735.0
(22) Anmeldetag: 23.11.2004
(51) Int. Cl.: F16C 27/06, D01H 4/12

(54) **LAGERVORRICHTUNG ZUR LAGERUNG EINES HOCHTOURIG LAUFENDEN ROTORS**
BEARING DEVICE FOR MOUNTING OF A HIGH-SPEED ROTOR
DISPOSITIF DE PALIER POUR SOUTENIR UN ROTOR A HAUTE VITESSE

(30) Priorität: 18.02.2004 DE 102004007758
(43) Veröffentlichungstag der Anmeldung: 08.11.2006
(73) Patentinhaber: Oerlikon Accotex Texparts GmbH, 70736 Fellbach (DE)
(72) Erfinder: BIRKENMAIER, Wilheim, 71384 Weinstadt (DE)
(74) Vertreter: Hamann, Arndt
(86) Internationale Anmeldenummer: PCT/EP2004/013276
(87) Internationale Veröffentlichungsnummer: WO 2005/090805

(56) Entgegenhaltungen:
- DE-A1- 3 605 270
- DE-A1- 19 901 598
- US-A- 3 911 659
- US-A- 4 513 566

## Beschreibung

Die Erfindung betrifft eine Lagervorrichtung zur Lagerung eines hochtourig laufenden Rotors gemäß dem Oberbegriff des Anspruchs 1.

Derartige hochtourige Rotorlagerungen werden an Open-End-Spinnmaschinen eingesetzt und sind in der Innenhülse einer Dämpfungseinrichtung befestigt, um die auftretenden hohen dynamischen Kräfte abbauen zu können. Die Innenhülse ist von gummielastischen Elementen im Rotorgehäuse gehaltert. Zwischen Rotorlagerung und Innenhülse der Dämpfungseinrichtung wird eine möglichst starre Verbindung hergestellt, um zu verhindern, daß durch Eigenelastizität bedingte zusätzliche Eigenresonanzen entstehen. Die Rotorlagerung muß mit dem Rotor axial im Rotorgehäuse justierbar sein, um den Rotor in die richtige Position zu den Elementen der Fasereinspeisung und des Fadenabzugs einstellen zu können. Diese axiale Positionierung kann durch Verschieben der Rotorlagerung zusammen mit den ringförmigen Dämpfungselementen der Dämpfungseinrichtung im Rotorgehäuse vorgenommen werden oder durch Verschieben der Rotorlagerung allein in bereits vorfixierten Dämpfungselementen.

Die ringförmigen Dämpfungselemente setzen sich nach längerem Spinnbetrieb durch Schmutz, Staub und Schwingungskorrosion im Rotorgehäuse fest. Sie lassen sich dann nicht mehr feinfühlig zum Justieren der Rotorlagerung axial verschieben. Das Verschieben der Rotorlagerung zusammen mit den Dämpfungselementen im Rotorgehäuse wird daher nach Möglichkeit vermieden. Werden Dämpfungselemente und Rotorlagerung als voneinander unabhängige Komponenten eingebaut und gewartet, erfolgt die Justierung der Rotorlagerung daher bevorzugt durch Verschieben der Rotorlagerung in den Dämpfungselementen.

Durch die DE 38 37 733 A1 ist eine Lageranordnung für Spinnrotoren an Open-End-Spinnmaschinen bekannt, bei der die Innenhülse der Dämpfungselemente einen mittig angeordneten umlaufenden Bord mit einer durchgehenden Gewindebohrung umfaßt. In die Gewindebohrung ist eine Zylinderschraube mit geschlitztem Kopf und gegenüberliegender Spitze bis zum Anschlag des Schraubenkopfes eingeschraubt. Um den Lageraußenring verläuft eine Nut mit einem eingelegten Ring. Der Ring ist üblicherweise aus Kunststoff oder einem ähnlich verformbaren Material. Die Spitze der Zylinderschraube dringt in den Kunststoffring ein und spannt so die Rotorlagerung fest. Bei jedem Herausnehmen der Rotorlagerung zu Wartungszwecken muß neu axial justiert werden, und es ist darauf zu achten, daß die Schraubenspitze an einer neuen Stelle in den Kunststoffring eindringt. Nachteilig ist auch die Übertragung der Klemmkraft über die kleine Fläche der Schraubenspitze. Wenn der Kunststoff kriecht, läßt die Klemmkraft der Schraubenspitze und damit die Befestigungssicherheit der Rotorlagerung nach. Wird die Rotorlagerung häufig ausgebaut, kann es notwendig werden, den Kunststoffring durch einen neuen zu ersetzen, da der gebrauchte Kunststoffring eine Vielzahl von Eindrückspuren der Spitze der Zylinderschraube aufweist und dadurch eine sichere Klemmung der Rotorlagerung nicht mehr gewährleistet ist.

Die DE 199 01 565 A1 zeigt eine Lagerung eines Spinnrotors einer Open-End-Spinnmaschine mit einem Nachschmiersystem. Das Nachschmiersystem ist im Hinblick auf die erforderlichen Bauteile und die Montage aufwendig. Die Befestigung des Lageraußenrings an der Innenhülse der Dämpfungseinrichtung erfolgt mittels einer Zylinderschraube mit geschlitztern Kopf. Die Schraube wird bei dieser Ausführung nicht von einem in die Innenhülse eingebrachten Gewinde, sondern von einem fest mit der Innenhülse verbundenen Aufsetzstück mit Innengewinde gehalten. Üblicherweise besteht das Aufsetzstück aus einer aufgeschweißten Mutter. Beim Anziehen der Schraube wirkt die Kraft in Richtung des Ablösens der Mutter. Daher muß die Mutter so gut befestigt sein, wie es durch Anschweißen erreichbar ist oder das Innengewinde muß Teil der Dämpfungsinnenhülse sein. Nachteilig bei einer angeschweißten Mutter ist, daß wegen der gewölbten Fläche der Innenhülse handelsübliche Normschweißmuttern und normales Widerstandsschweißen nicht eingesetzt werden können. Die Erwärmung kann zudem zu Verformungen der Dämpfungsinnenhülse führen. Die Schraube weist keine Spitze auf, die in den um die Innenhülse verlaufenden Kunststoffring eindringt. Die Schraube drückt lediglich flächig auf den auch hier vorhandenen Kunststoffring. Die Fixierung des Lageraußenringes erfolgt nur durch Klemmung. Eine Unterstützung der Klemmung durch plastische Verformung mittels einer eindringenden Spitze erfolgt bei dieser Ausführung nicht. Die Abnutzung des Kunststoffrings und damit die Notwendigkeit, den Kunststoffring nach einiger Zeit zu ersetzen, bleibt jedoch nachteilig bestehen.

Es ist Aufgabe der Erfindung, die bekannten Lagerungen für Rotoren zu verbessern.

Diese Aufgabe wird mit einer Lagervorrichtung mit den Merkmalen des Anspruchs 1 gelöst.

Vorteilhafte Ausgestaltungen der Erfindung sind Gegenstand der Unteransprüche.

Die erfindungsgemäße Lagervorrichtung gewährleistet eine sichere und langlebige Befestigung zwischen Dämpfungsinnenhülse und Lagerring. Ein Kunststoffklemmring sowie das Einbringen umlaufender Nuten in den Lagerring ist nicht mehr erforderlich. Verformungen durch Aufschweißen einer Mutter können nicht mehr auftreten. Durch die erfindungsgemäße Anordnung der Schraube wird die Verbindung zwischen Lagerring und Dämpfungsinnenhülse durch Zug hergestellt. Dadurch wird im Gegensatz zu einer Ausführung mit aufgeschweißter Mutter nach dem Stand der Technik die Verbindung zwischen Druckverteilungselement und Dämpfungsinnenhülse verstärkt und nicht wie beim Stand der Technik beansprucht. Dadurch ergibt sich die Möglichkeit einer lösbaren Befestigung, was zu einer Reduzierung des Fertigungsaufwnades gegenüber dem Stand der Technik führt. Die alternative Ausbildung eines um die Dämpfungsinnenhülse umlaufenden Bordes kann entfallen. Aus diesem Grunde wird bei der Herstellung der Dämpfungsinnenhülse vor allem der Bearbeitungsaufwand gesenkt. Der Aufwand für Montage, Wartung sowie Justierung wird vermindert und trägt damit zur Kostensenkung bei.

Wird die Schraube in vom Innengewinde des Lagerrings gelöster Position vom Druckverteilungselement gehaltert, wird die Schraube unverlierbares Teil der Dämpfungsinnenhülse. Die Lagervorrichtung wird damit montagefreundlicher.

Ist eine Öffnung in der Dämpfungsinnenhülse gemäß Anspruch 4 als Langloch in axialer Richtung ausgebildet und das Rotorlager bei gelöster Schraube gegenüber der Dämpfungsinnenhülse axial verschiebbar, ist eine Justierung des Rotorlagers beziehungsweise des Spinnrotors schnell und einfach möglich. Diese Möglichkeit ist auch dadurch gegeben, dass das Druckverteilungselement lösbar angebracht und axial auf der Dämpfungsinnenhülse verschiebbar ist.

Weist das Druckverteilungselement ringsegmentförmige Haltearme auf, mit denen es auf die Dämpfungsinnenhülse aufrastbar ist, ist ein einfaches und schnelles Aufbringen des Druckverteilungselementes auf die Dämpfungsinnenhülse möglich. Das Druckverteilungselement bleibt wie beschrieben für eine einfache Justierung axial begrenzt verschiebbar.

Eine Ausbildung des Druckverteilungselementes gemäß Anspruch 6 sowie eine Ausbildung der Schraube gemäß Anspruch 7 gewährleisten eine gute Auflage des Schraubenkopfes sowie eine gute Verteilung der Anpreßkraft auf die Dämpfungsinnenhülse. Durch die angeformte Scheibe ist eine sichere Halterung der Schraube in Kerben der Rasthaken möglich.

Durch eine Ausbildung der Schraube gemäß Anspruch 8 kann eine aufwendige Nachschmiereinrichtung, wie sie beispielsweise aus der DE 199 01 565 A1 bekannt ist, entfallen. Der Nachschmiervorgang läßt sich einfach durchführen.

Besteht das Druckverteilungselement aus elastischem Material, ist das Aufbringen des Druckverteilungselementes und die Halterung der Schraube einfach.

Druckverteilungselemente gemäß Anspruch 10 sowie gemäß Anspruch 11 erlauben eine kostengünstige Herstellung.

Die Verbindung von Lagerring und Dämpfungsinnenhülse mittels Klemmung durch Reibschluß sowie plastische Verformung wird vorteilhaft durch eine formschlüssige und verschleißfreie Verbindung ersetzt. Die erfindungsgemäße Lagervorrichtung erlaubt vorteilhaft eine sichere Lagerbefestigung und ein einfaches Nachschmieren mittels der beiden Bauteile Druckverteilungselement und Schraube. Alle Teile sind kostengünstig herstellbar. Die Lagervorrichtung ist einfach montierbar und erleichtert die Wartung und Justierung.

Weitere Einzelheiten der Erfindung sind den Ausführungsbeispielen der Figuren entnehmbar.

Es zeigen:
- Fig. 1: einen Schnitt durch eine Lagervorrichtung mit einem Spinnrotor,
- Fig. 2: die Lagervorrichtung der Fig. 1 mit gelöster Schraube im Schnitt,
- Fig. 3: die Lagervorrichtung der Fig. 2 in perspektivischer Ansicht,
- Fig. 4: ein Halteelement in perspektivischer Ansicht.

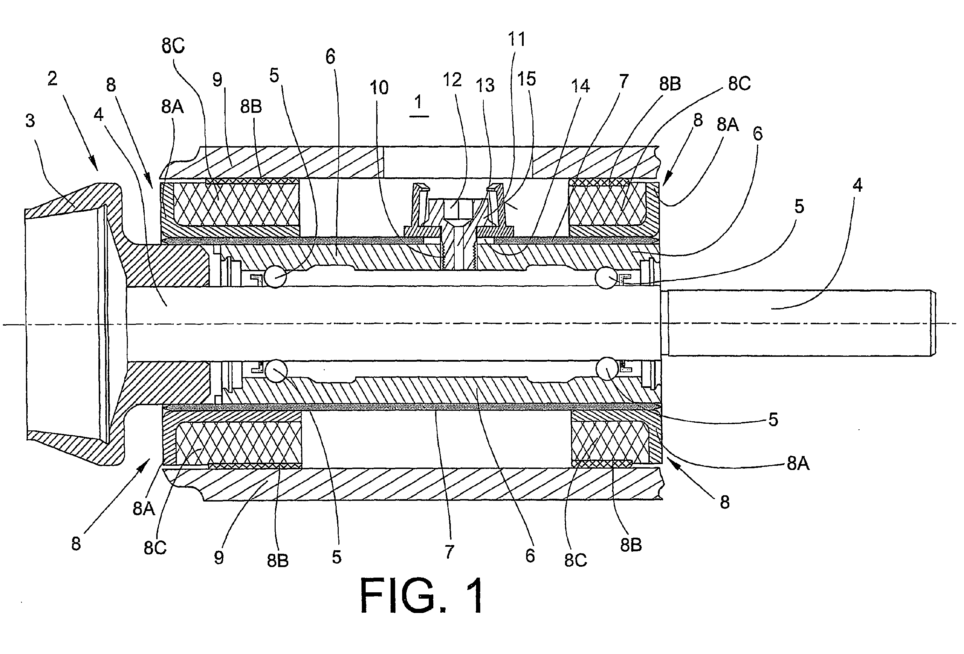

Fig. 1 zeigt eine Lagervorrichtung 1 zur Lagerung eines Spinnrotors 2. Der Spinnrotor 2 besteht aus einem Rotorteller 3 und einer Rotorwelle 4. Die Rotorwelle 4 ist mittels einer Kugellagereinrichtung 5 in einem Lagerring 6 drehbar gelagert. Der Lagerring 6 ist von einer Dämpfungsinnenhülse 7 umschlossen, die ihrerseits in gummielastischen ringförmigen Dämpfungselementen 8 befestigt ist. Die Dämpfungselemente 8 umfassen jeweils einen inneren Armierungsring 8A und einen äußeren Armierungsring 8B aus Stahl sowie einen einvulkanisierten Gummiring 8C und werden in einem Gehäuse 9 gehaltert. Der Lagerring 6 weist ein durchgehendes Innengewinde 10 auf, in das eine Schraube 11 eingreift. Die Schraube 11 ist als Zylinderkopfschraube mit Innensechskant 12 ausgebildet. Durch die Schraube 11 führt eine Nachschmierbohrung 13. Mittels der Nachschmierbohrung 13 läßt sich die Kugellagereinrichtung 5 auf einfache Weise und ohne großen baulichen Aufwand nachschmieren. Die Schraube 11 greift durch eine Öffnung 14 der Dämpfungsinnenhülse 7 und beaufschlagt in angezogenem Zustand ein Druckverteilungselement 15 mit einer Kraft in Richtung Lagerring 6 und preßt die Dämpfungsinnenhülse 7 gegen den Lagerring 6. Damit wird eine starre Verbindung zwischen dem Lagerring 6 und der Dämpfungsinnenhülse 7 hergestellt und der Lagerring 6 in seiner Position fixiert.

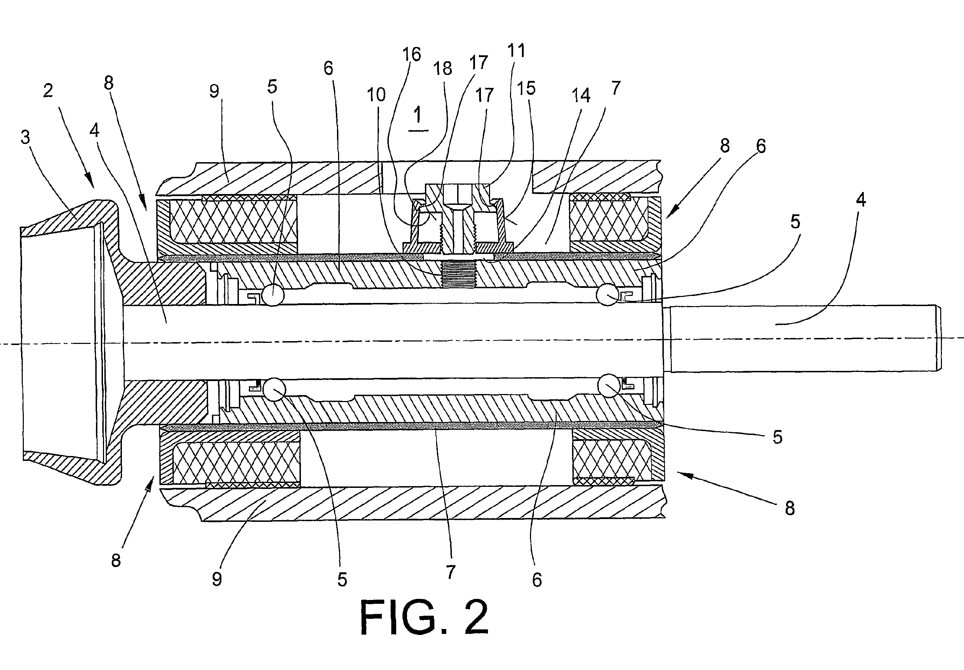

In Fig. 2 greift die Schraube 11 nicht mehr in das Innengewinde 10 ein und befindet sich in einer vom Lagerring 6 gelösten und beabstandeten Position. Die Schraube 11 weist eine am Zylinderkopf angeformte Scheibe 16 auf. Die Scheibe 16 greift in der vom Lagerring 6 beabstandeten Position in Kerben 17 von zwei sich gegenüberstehenden elastischen Rasthaken 18 des Druckverteilungselementes 15 ein. Der Abstand zwischen den Rasthaken 18 verringert sich zu ihren freien Enden hin.

Wird die Schraube aus dem Innengewinde herausgeschraubt, drückt die Scheibe 16 die Rasthaken 18 im Verlauf des Herausdrehens auseinander und rastet schließlich in die Kerben 17 der Rasthaken 18 ein. In dieser Position wird die Schraube 11 vom Druckverteilungselement 15 sicher und auf einfache Weise gehalten, kann nicht verlorengehen und ist für das spätere Einschrauben in das Innengewinde 10 des Lagerrings 6 bereits passend positioniert. Der Lagerring 6 des Rotorlagers kann in dieser Position der Schraube 11 axial verschoben und ausgebaut werden.

Ein begrenztes axiales Verschieben des Lagerrings 6 ist bereits möglich, wenn die Schraube 11 nur einige Umdrehungen herausgedreht und damit das Anpressen der Dämpfungsinnenhülse an den Lagerring 6 aufgehoben ist. Die Schraube 11 kann sich dabei in der Öffnung 14, die als Langloch in axialer Richtung ausgeführt ist, bewegen und nimmt das Druckverteilungselement 15 mit. Damit ist ein Justieren der Position des Lagerrings 6 beziehungsweise des Spinnrotors 2 schnell und einfach ohne großen Montageaufwand möglich.

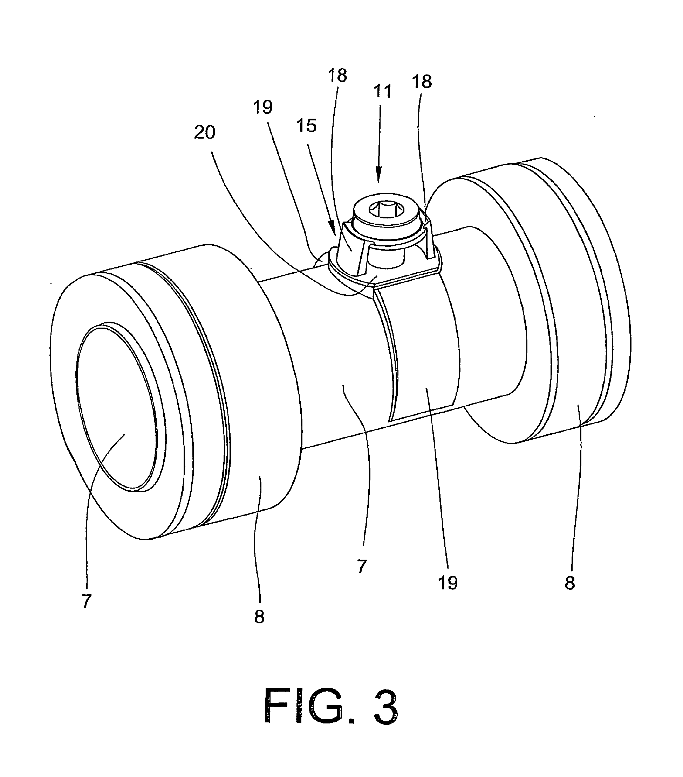

Das Druckverteilungselement 15 der Fig. 2 mit der Schraube 11 in der vom Innengewinde 10 des Lagerrings 6 gelösten Position, wobei der Lagerring 6 samt Spinnrotor 2 ausgebaut ist, ist in der Fig. 3 in perspektivischer Darstellung gezeigt. Die Dämpfungseinrichtung umfaßt die ringförmigen Dämpfungselemente 8 sowie die Dämpfungsinnenhülse 7, wobei die Dämpfungselemente 8 auf die Enden der Dämpfungsinnenhülse 7 aufgebracht sind.

Auf der Dämpfungsinnenhülse 7 ist das Druckverteilungselement 15 so angeordnet, daß die Schraube 11 durch die in der Fig. 3 nicht sichtbare Öffnung 14 durchgreifen kann. Die Schraube 11 wird von beiden Rasthaken 18 gehalten. Die Haltearme 19 haben ausreichend Elastizität, um sich beim Aufbringen des Druckverteilungselementes 15 auf die Dämpfungsinnenhülse 7 so weit zu öffnen, daß das Druckverteilungselement 15 aufgerastet werden kann, und um sich dann an die Dämpfungsinnenhülse 7 zu legen. Das Druckverteilungselement 15 ist auf der der Dämpfungsinnenhülse 7 zugewandten Seite der Zylinderform der Dämpfungsinnenhülse 7 angepaßt. Die Rasthaken 18 sind am Rande einer flachen Auflage 20 angeordnet, auf die die Unterseite des Zylinderkopfes der Schraube 11 aufliegt. Damit wird eine gute Verteilung der Anpreßkraft bei angezogener Schraube 11 ermöglicht.

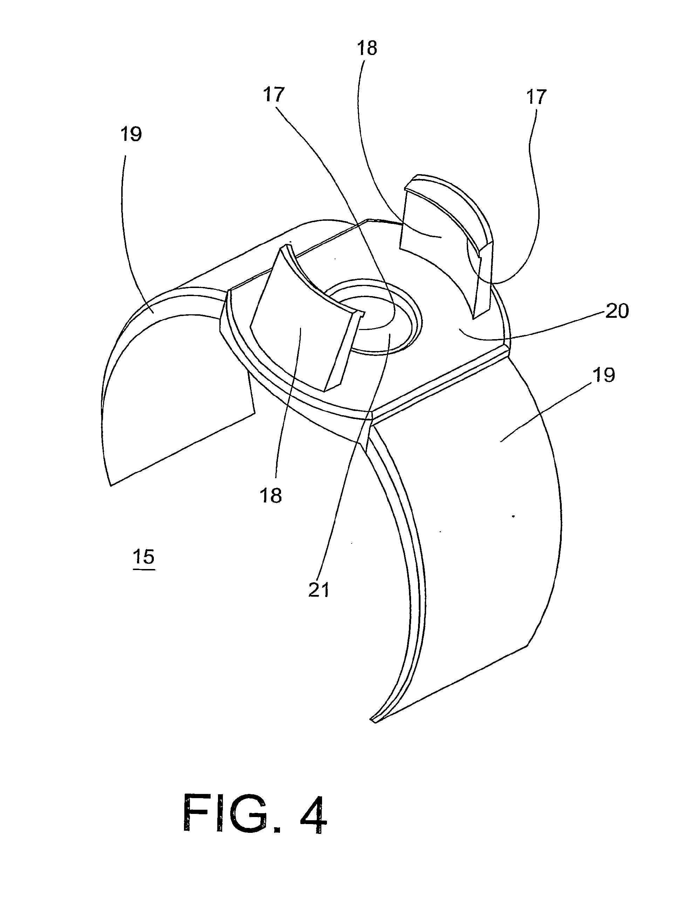

Fig. 4 zeigt eine gegenüber den Figuren 1 bis 3 vergrößerte Darstellung des Druckverteilungselementes 15. Die Wölbung an der Innenseite der Haltearme 19 ist in dieser Darstellung deutlich zu erkennen. Die Rasthaken 18 mit den Kerben 17 können durch die einander gegenüberliegende Anordnung die am Zylinderkopf der Schraube 11 ausgeformte Scheibe 16 gut umfassen und festhalten, wenn die Schraube 11 aus dem Innengewinde 10 herausgedreht worden ist.

Beim Herausdrehen der Schraube 11 mit Hilfe eines in den Innensechskant des Schraubenkopfes eingeführten Schlüssels berührt die Scheibe 16 ab einer bestimmten Position die Rasthaken 18 und drückt diese beim Weiterdrehen auseinander. Wenn die Schraube 11 vom Innengewinde 10 gelöst ist, wird sie von Hand etwas hochgezogen, bis die Scheibe 16 die Kerben 17 erreicht hat und dort einrastet. Zum Wiedereindrehen der Schraube 11 wird diese nach unten gedrückt und die Scheibe 16 dadurch aus den Kerben 17 herausgelöst. Die Schraube 11 greift durch die Bohrung 21 des Druckverteilungselementes 15 hindurch in das Innengewinde 10 des Lagerrings 6 ein und kann nun wieder festgezogen werden. Das Druckverteilungselement 15 ist als ein aus Kunststoff hergestelltes Spritzgussteil ausgeführt.

Die bisher übliche Verbindung von Lagerring 6 und Dämpfungsinnenhülse 7 mittels einer Schraube in bekannter Ausführung, wobei eine Klemmung durch Reibschluss sowie eine plastische Verformung wirkt, wird vorteilhaft durch eine formschlüssige, verschleißfreie und sichere Verbindung ersetzt, deren Schraube 11 nicht verloren geht, da sie durch das Druckverteilungselement 15 in herausgedrehtem Zustand gehalten wird.

## Patentansprüche

1. Lagervorrichtung zur Lagerung eines hochtourig laufenden Rotors (4) mit einem Rotorlager und einer Dämpfungseinrichtung, wobei das Rotorlager einen Lagerring (6) und die Dämpfungseinrichtung eine Dämpfungsinnenhülse (7) aufweisen, und wobei der Lagerring (6) von der Dämpfungsinnenhülse (7) umschlossen und mittels einer Schraube (11) mit der Dämpfungsinnenhülse (7) zur Fixierung fest verbindbar ist,
**dadurch gekennzeichnet,**
**daß** der Lagerring (6) ein radial verlaufendes Innengewinde (10) aufweist, in das das Gewinde der Schraube (11) eingreift, daß die Dämpfungsinnenhülse (7) eine Öffnung (14) aufweist, daß auf der Dämpfungsinnenhülse (7) ein Druckverteilungselement (15) angeordnet ist, das eine mit der Öffnung (14) fluchtende Bohrung (21) besitzt und dass die Öffnung (14) und die Bohrung (21) so dimensioniert sind, dass sie den freien Durchtritt der Schraube (11) gestatten.

2. Lagervorrichtung nach Anspruch 1, **dadurch gekennzeichnet, daß** das Druckverteilungselement (15) so ausgebildet ist, daß die Schraube (11) in vom Innengewinde (10) des Lagerrings (6) gelöster Position vom Druckverteilungselement (15) gehaltert ist.

3. Lagervorrichtung nach Anspruch 2, **dadurch gekennzeichnet, daß** das Druckverteilungselement (15) zwei Rasthaken (18) zur Halterung der Schraube (11) aufweist.

4. Lagervorrichtung nach einem der Ansprüche 1 bis 3, **dadurch gekennzeichnet, daß** die Öffnung (14) in der Dämpfungsinnenhülse als Langloch in axialer Richtung ausgebildet ist, und daß das Rotorlager bei gelöster Schraube (11) gegenüber der Dämpfungsinnenhülse (7) axial verschiebbar ist.

5. Lagervorrichtung nach einem der Ansprüche 1 bis 4, **dadurch gekennzeichnet, daß** das Druckverteilungselement (15) ringsegmentförmige Haltearme (19) aufweist, mit denen es auf die Dämpfungsinnenhülse (7) aufrastbar ist.

6. Lagervorrichtung nach einem der Ansprüche 1 bis 5, **dadurch gekennzeichnet, daß** die Schraube (11) eine am Schraubenkopf angeformte, den Schraubenkopf überragende Scheibe (16) zur Vergrößerung der Auflagefläche des Schraubenkopfes aufweist.

7. Lagervorrichtung nach einem der Ansprüche 1 bis 6, **dadurch gekennzeichnet, daß** das Druckverteilungselement (15) eine ebene Auflage (20) für den Schraubenkopf aufweist.

8. Lagervorrichtung nach einem der Ansprüche 1 bis 7, **dadurch gekennzeichnet, daß** die Schraube (11) eine Nachschmierbohrung (13) aufweist.

9. Lagervorrichtung nach einem der Ansprüche 1 bis 8, **dadurch gekennzeichnet, daß** das Druckverteilungselement (15) aus elastischem Material besteht.

10. Lagervorrichtung nach Anspruch 9, **dadurch gekennzeichnet, daß** das Druckverteilungselement (15) aus Kunststoff besteht.

11. Lagervorrichtung nach einem der Ansprüche 9 oder 10, **dadurch gekennzeichnet, daß** das Druckverteilungselement (15) als Spritzgußteil gefertigt ist.

## Claims

1. Bearing device for mounting a high-speed rotor (4) with a rotor bearing and a damping device, wherein the rotor bearing has a bearing ring (6) and the damping device has a damping inner sleeve (7), and wherein the bearing ring (6) is surrounded by the damping inner sleeve (7) and can be rigidly connected to the damping inner sleeve (7) for fixing by means of a screw (11),
**characterised in that**
the bearing ring (6) has a radially internal thread (10), in which the thread of the screw (11) engages, **in that** the damping inner sleeve (7) has an opening (14), **in that** a pressure distribution element (15) is arranged on the damping inner sleeve (7) and has a bore (21) which is flush with the opening (14), and **in that** the opening (14) and the bore (21) are dimensioned such that they allow the free passage of the screw (11).

2. Bearing device according to claim 1, **characterised in that** the pressure distribution element (15) is configured such that the screw (11) is held in a position loosened from the internal thread (10) of the bearing ring (6) by the pressure distribution element (15).

3. Bearing device according to claim 2, **characterised in that** the pressure distribution element (15) comprises two latching hooks (18) for holding the screw (11).

4. Bearing device according to any one of claims 1 to 3, **characterised in that** the opening (14) in the damping inner sleeve is configured as an elongated slot in axial direction, and **in that** the rotor bearing is axially displaceable relative to the damping inner sleeve (7) when the screw (11) is loosened.

5. Bearing device according to any one of claims 1 to 4, **characterised in that** the pressure distribution element (15) has ring-segment-shaped holding arms (19) with which it can be latched onto the damping inner sleeve (7).

6. Bearing device according to any one of claims 1 to 5, **characterised in that** the screw (11) comprises a disc (16) moulded onto the screw head and projecting over the screw head for enlarging the contact face of the screw head.

7. Bearing device according to any one of claims 1 to 6, **characterised in that** the pressure distribution element (15) has a flat support (20) for the screw head.

8. Bearing device according to any one of claims 1 to 7, **characterised in that** the screw (11) has a regreasing bore (13).

9. Bearing device according to any one of claims 1 to 8, **characterised in that** the pressure distribution element (15) is made of an elastic material.

10. Bearing device according to claim 9, **characterised in that** the pressure distribution element (15) is made of plastic.

11. Bearing device according to any one of claims 9 or 10, **characterised in that** the pressure distribution element (15) is produced as an injection moulded part.

## Revendications

1. Ensemble de palier pour monter un rotor (4) tournant à grande vitesse, comprenant un palier de rotor et un dispositif d'amortissement, le palier de rotor présentant une bague de palier (6) et le dispositif d'amortissement une douille intérieure d'amortissement (7), et la bague de palier (6) étant entourée par la douille intérieure d'amortissement (7) et pouvant être assemblée à demeure, au moyen d'une vis (11), avec ladite douille intérieure d'amortissement (7) pour immobiliser cette dernière, **caractérisé en ce que** la bague de palier (6) présente un taraudage radial (10) dans lequel se met en prise le filetage de la vis (11), **en ce que** la douille intérieure d'amortissement (7) présente une ouverture (14), **en ce qu'**un élément répartissant la pression (15) qui est doté d'un perçage (21) situé dans l'alignement de l'ouverture (14) est placé sur la douille intérieure d'amortissement (7), et **en ce que** l'ouverture (14) et le perçage (21) sont dimensionnés de telle sorte qu'ils permettent le passage libre de la vis (11).

2. Ensemble de palier selon la revendication 1, **caractérisé en ce que** l'élément répartissant la pression (15) est réalisé de telle sorte que la vis (11) est maintenue par l'élément répartissant la pression (15) lorsqu'elle est dévissée du taraudage (10) de la bague de palier (6).

3. Ensemble de palier selon la revendication 2, **caractérisé en ce que** l'élément répartissant la pression (15) présente deux crochets d'arrêt (18) pour maintenir la vis (11).

4. Ensemble de palier selon l'une des revendications 1 à 3, **caractérisé en ce que** l'ouverture (14) dans la douille intérieure d'amortissement est réalisée en tant que trou oblong dans la direction axiale, et **en ce que** le palier du rotor peut être déplacé axialement par rapport à la douille intérieure d'amortissement (7) lorsque la vis (11) est dévissée.

5. Ensemble de palier selon l'une des revendications 1 à 4, **caractérisé en ce que** l'élément répartissant la pression (15) présente des bras de retenue (19) en forme de segment d'anneau, à l'aide desquels il peut être enclenché sur la douille intérieure d'amortissement (7).

6. Ensemble de palier selon l'une des revendications 1 à 5, **caractérisé en ce que** la vis (11) présente une rondelle (16) ménagée au niveau de la tête de vis et faisant saillie de celle-ci, qui est destinée à agrandir la surface d'appui de la tête de vis.

7. Ensemble de palier selon l'une des revendications 1 à 6, **caractérisé en ce que** l'élément répartissant la pression (15) présente un support plan (20) pour la tête de vis.

8. Ensemble de palier selon l'une des revendications 1 à 7, **caractérisé en ce que** la vis (11) présente un perçage de regraissage (13).

9. Ensemble de palier selon l'une des revendications 1 à 8, **caractérisé en ce que** l'élément répartissant la pression (15) est constitué d'une matière élastique.

10. Ensemble de palier selon la revendication 9, **caractérisé en ce que** l'élément répartissant la pression (15) est composé de matière plastique.

11. Ensemble de palier selon la revendication 9 ou 10, **caractérisé en ce que** l'élément répartissant la pression (15) est fabriqué en tant que pièce moulée par injection.
